# EUROPÄISCHE PATENTSCHRIFT

(11) **EP 0 570 756 B1**
(45) Veröffentlichungstag und Bekanntmachung des Hinweises auf die Patenterteilung: **05.02.1997**
(21) Anmeldenummer: 93107193.0
(22) Anmeldetag: 04.05.1993
(51) Int. Cl.: C02F 9/00, C02F 1/78, C02F 1/32

(54) **Verfahren zur Oxidation von organischen Substanzen in Wasser oder Abwasser**
Method for oxidizing organic compounds in water or waste water
Procédé pour l'oxydation des matières organiques dans les eaux ou eaux usées

(30) Priorität: 21.05.1992 DE 4216784
(43) Veröffentlichungstag der Anmeldung: 24.11.1993
(73) Patentinhaber: MESSER GRIESHEIM GMBH, D-60547 Frankfurt (DE)
(72) Erfinder: Hertrampf, Joachim, W-4532 Mettingen (DE); Shadiakhy, Abdol Hossein, Dr., W-5024 Pulheim (DE)

(56) Entgegenhaltungen:
- EP-A- 0 373 268
- EP-A- 0 537 451
- GB-A- 1 583 394
- US-A- 5 124 051
- US-A- 5 178 755
- PATENT ABSTRACTS OF JAPAN, unexamined applications, C Section, Band 12, Nr. 301, 16. August 1988, THE PATENT OFFICE JAPANESE GOUVERNMENT Seite 6 C 521
- Chemiker Zeitung, Jahrgang 110, Nr. 5, 11. Juni 1986, Heidelberg, Kurt Marquart "Reinstwassererzeugung unter BerUcksichtigung organisch hochbelasteten Rohwassers" Seiten 197-211

## Beschreibung

Die Erfindung betrifft ein Verfahren zur Oxidation von organischen Substanzen in Wasser oder Abwasser, welches biologisch vorbehandelt ist oder biologisch nachbehandelt wird, nach dem Oberbegriff des Anspruches 1.

Durch die Kombination von Ozon und UV-Bestrahlung können auch solche Substanzen oxidiert werden, die allein mit Ozon oder UV-Licht nicht oder nur ungenügend reagieren würden. Die durch die kombinierte Behandlung mit Ozon und UV-Licht erhaltenen Reaktionsprodukte sind leicht biologisch abbaubar.

Bei einem bekannten Verfahren dieser Art (Dr.O.Leitzke, The combined application of ozone and UV irradiation for the treatment of water, ISBN 92-9095-000-5, Seite 357 bis 370) wird das zu behandelnde Abwasser im Gleichstrom mit dem ozonhaltigen Gas durch mehrere, in der Regel zwei, Reaktionsbehälter geleitet und nach der Restgasabtrennung der UV-Bestrahlung ausgesetzt. Dieses Verfahren hat einen verhältnismäßig hohen Ozonbedarf.

Der Erfindung liegt die Aufgabe zugrunde, ein Verfahren zur Oxidation von organischen Substanzen in Abwasser durch eine kombinierte Behandlung mit Ozon und UV-Bestrahlung zu schaffen, welches einen geringen spezifischen Ozonverbrauch und geringen Energiebedarf aufweist.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine vorteilhafte Weiterbildung der Erfindung ist im Unteranspruch angegeben.

Durch die erfindungsgemäße Maßnahme, Abwasser und Ozon im Gegenstrom zu führen und den Eintrag des ozonhaltigen Gases in die Reaktionsbehälter durch deren unterschiedliche Druckniveaus zu bewerkstelligen, ergibt sich ein hoher Ausnutzungsgrad des Ozons, verbunden mit einem günstigen Energiebedarf. Aus diesem Grund können die Reaktionsbehälter auch klein gehalten werden, wodurch die Investitionskosten gesenkt werden.

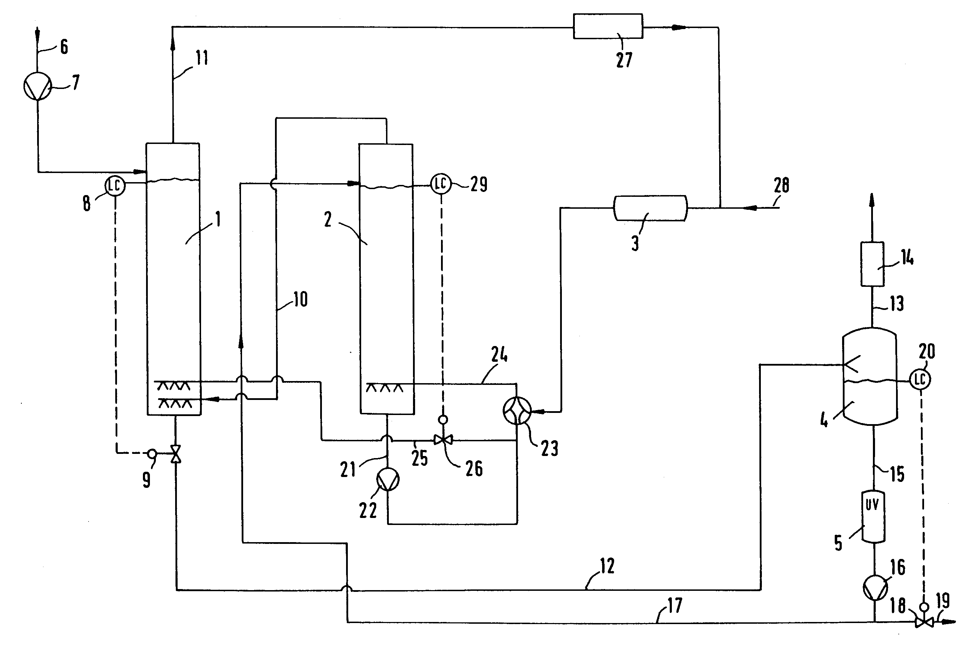

Die Zeichnung veranschaulicht in schematischer Form ein Ausführungsbeispiel der Erfindung.

Dargestellt ist eine Anlage zur Behandlung von biologisch vorbehandeltem Abwasser, welche im wesentlichen besteht aus den Reaktionsbehältern 1,2, dem Ozonerzeuger 3, dem Entgasungsbehälter 4 und dem UV-Reaktor 5. Erfindungsgemäß werden die Reaktionsbehäler 1,2 mit in Strömungsrichtung des Abwassers gesehen zunehmenden Drücken betrieben, nämlich Reaktionsbehälter 1 mit 5 bar und Reaktionsbehälter 2 mit 7 bar.

Das biologisch vorbehandelte Abwasser tritt durch die Leitung 6 in die Anlage ein und wird durch die Pumpe 7 auf einen Druck von 5 bar gebracht. Es wird dem Reaktionsbehälter 1 zugeführt, dessen Füllstand durch den Füllstandsregler 8 und das Regelventil 9 geregelt wird. Erfindungsgemäß wird dem Reaktor 1 ozonhaltiges Gas durch Leitung 10 im Gegenstrom zum Abwasser zugeführt. Das Restgas verläßt den Kopfraum des Reaktionsbehälters 1 über Leitung 11.

Aus dem Reaktionsbehälter 1 strömt das Abwasser über das Regelventil 9 und Leitung 12 in den Entgasungsbehälter 4, wo das ozonhaltige Restgas abgetrennt und durch Leitung 13 dem Ozonvernichter 14 zugeführt wird. Das entgaste Abwasser wird aus dem Entgasungsbehälter 4 durch Leitung 15 in den UV-Reaktor 5 geleitet und mittels der Pumpe 16 auf einen Druck von 7 bar gebracht. Von hier strömt es durch Leitung 17 in den Reaktionsbehälter 2. Ein Teil des entgasten Abwassers wird als fertig behandeltes Abwasser durch das Ventil 18 und die Leitung 19 abgezogen. Der Füllstand im Entgasungsbehälter 4 wird durch den Füllstandregler 20 eingestellt.

Aus dem Reaktionsbehälter 2 wird durch Leitung 21 Abwasser entnommen, mittels der Pumpe 22 druckerhöht, im Injektor 23 mit einem Ozon-Sauerstoff-Gemisch angereichert und durch Leitung 24 dem Reaktionsbehälter 2 wieder zugeführt. Ein Teil des Abwassers wird vor dem Injektor 23 durch die Leitung 25 und das Ventil 26 dem Reaktionsbehälter 1 zugeführt. Das ozonhaltige Kopfgas aus dem Reaktionsbehälter 2 wird durch Leitung 10 erfindungsgemäß infolge des Druckgefälles über Filterplatten dem Reaktionsbehälter 1 zugeführt. Der Füllstand im Reaktionsbehälter 2 wird durch den Füllstandsregler 29 geregelt.

Das über Leitung 11 aus dem Reaktionsbehälter 1 abgezogene Restgas durchströmt einen Trockner 27, wird mit Sauerstoff aus Leitung 28 vermischt und im Ozonerzeuger 3 wieder teilweise in Ozon umgewandelt.

## Patentansprüche

1. Verfahren zur Oxidation von organischen Substanzen in Wasser oder Abwasser, welches biologisch vorbehandelt ist oder biologisch nachbehandelt wird, durch Ozonisierung mit einem ozonhaltigen Gas oder einer ozonhaltigen Flüssigkeit in mindestens zwei hintereinandergeschalteteten Reaktionsbehältern (1, 2) und eine UV-Bestrahlung in einem UV-Reaktor (5),
dadurch gekennzeichnet,
daß die vom Abwasser nacheinander durchströmten Reaktionsbehälter mit von Behälter zu Behälter zunehmenden Drücken betrieben werden, vom ozonhaltigen Gas im Gegenstrom zum Abwasser durchströmt werden und der Eintrag des ozonhaltigen Gases von einem Reaktionsbehälter in den nachfolgenden durch das Druckgefälle erfolgt.

2. Verfahren nach Anspruch 1,
dadurch gekennzeichnet,
daß die UV-Bestrahlung bei Umgebungsdruck erfolgt.

3. Verfahren nach Anspruch 1,
dadurch gekennzeichnet,
daß die UV-Bestrahlung bei 0,1 bis 8 bar Überdruck erfolgt.

4. Verfahren nach einem der Ansprüche 1 bis 3,
dadurch gekennzeichnet,
daß es mit zwei Reaktionsbehältern betrieben wird.

## Claims

1. Method for oxidising organic substances in water or sewage, which is pre-treated or subsequently treated biologically, by ozonisation with an ozone-containing gas or fluid, in at least two reaction containers (1, 2) connected in series, and by UV radiation in a UV reactor (5),
characterised in that:
the reaction containers through which the sewage flows operate at a pressure which increases from one container to the next, ozone-containing gas passes through the containers as a counter-flow to the sewage, and the ozone-containing gas is drawn from one reaction container to the next by means of the pressure drop.

2. Method according to Claim 1, characterised in that the UV radiation takes place at ambient pressure.

3. Method according to Claim 1, characterised in that the UV radiation takes place at 0.1 to 8 bar excess pressure.

4. Method according to Claims 1 to 3, characterised in that it is performed with two reaction containers.

## Revendications

1. Procédé d'oxydation de matières organiques dans des eaux ou des eaux usées, avec traitement biologique préalable ou traitement biologique postérieur,
par ozonisation avec un gaz contenant de l'ozone ou un liquide contenant de l'ozone, dans au moins deux cuves de réaction (1, 2) placées l'une derrière l'autre, et une irradiation aux ultraviolets UV dans un réacteur à ultraviolets (5),
caractérisé en ce que
les cuves de réaction traversées par les eaux usées fonctionnent sous des pressions croissantes d'une cuve à l'autre, et sont parcourues par le gaz contenant de l'ozone à contre courant par rapport à celui de la circulation des eaux usées, et le transfert de gaz contenant de l'ozone, d'une cuve de réaction à l'autre, se fait par chute de pression.

2. Procédé selon la revendication 1,
caractérisé en ce que
l'irradiation aux rayons ultraviolets UV se fait à la pression ambiante.

3. Procédé selon la revendication 1,
caractérisé en ce que
l'irradiation aux rayons ultraviolets se fait à une pression de 0,1 à 8 bars par rapport à la pression ambiante.

4. Procédé selon l'une des revendications 1 à 3,
caractérisé en ce qu'
il est mis en oeuvre avec deux cuves de réaction.
